# DEMANDE DE BREVET EUROPEEN

(11) **EP 2 896 310 A1**
(43) Date de publication de la demande: **22.07.2015**
(21) Numéro de dépôt: 15150113.7
(22) Date de dépôt: 05.01.2015
(51) Int. Cl.: A43B 5/14, B62M 3/08, A43B 13/16

(54) **Ensemble composé d'une chaussure et d'une plaque de retenue de la chaussure sur une pédale automatique de cycle, plaque de retenue pour un tel ensemble, et chaussure pour celui-ci**

(30) Priorité: 09.01.2014 FR 1450156
(71) Demandeur: Look Cycle International, 58000 Nevers (FR)
(72) Inventeur: Fournier, Thierry, 06570 Saint-Paul (FR)
(74) Mandataire: Petit, Maxime

(57) **Abrégé**

L'ensemble est composé d'une chaussure (1) et d'une plaque de retenue (2) de la chaussure sur une pédale automatique. La plaque est fixée sous la semelle (3) de la chaussure et comporte un moyen de liaison avant (4) et un moyen de liaison arrière (5) coopérant avec des moyens d'accrochage prévus sur la pédale. La plaque (2) est formée par une pièce avant (2A) et par une pièce arrière (2B) portant les moyens de liaison avant (4) respectivement arrière (5). Les pièces avant et arrière (2A, 2B) sont fixées l'une indépendamment de l'autre sous la semelle et sont montées de sorte à être séparées l'une de l'autre par une zone de flexion (9) s'étendant entre un emplacement de fixation avant (10) de ladite pièce avant (2A) et un emplacement de fixation arrière (11) de ladite pièce arrière (2B), et une surface d'appui (18) est disposée au niveau de ladite zone de flexion (9) de la semelle (3) de sorte à remplir sensiblement l'espace entre lesdits emplacements de fixation avant et arrière (10, 11) desdites pièces avant et arrière (2A, 2B) de manière à permettre d'une part, auxdites pièces avant et arrière (2A, 2B) d'effectuer un mouvement de pivotement l'une par rapport à l'autre en fonction d'une flexion de ladite semelle (3) dans ladite zone de flexion (9) lorsque l'ensemble est utilisé lors d'une marche à pied, et d'autre part à ladite surface d'appui (18) à venir en appui sur une pédale automatique.

## Description

La présente invention concerne un ensemble composé d'une chaussure et d'une plaque de retenue de la chaussure sur une pédale automatique de cycle.

La plaque de retenue de l'invention est une plaque qui peut être fixée de manière détachable sous la semelle de la chaussure à l'aide de moyens de fixation comprenant en général des vis de fixation passées par des trous dans la plaque de retenue pour être vissées dans des trous taraudés percés dans une platine métallique ancrée dans la semelle de la chaussure.

Cette plaque de retenue détachable comporte un moyen de liaison avant et un moyen de liaison arrière aptes à coopérer avec des moyens d'accrochage avant respectivement arrière prévus sur la pédale. En général, le moyen d'accrochage avant de la pédale est fixe et le moyen d'accrochage arrière est monté basculant. Ce dernier est précontraint vers une position d'accrochage par des moyens élastiques et la chaussure peut être libérée de la pédale automatique par une rotation du talon du pied du cycliste vers l'extérieur ou vers l'intérieur. Le fonctionnement de la pédale automatique de cycle est bien connu et ne sera pas décrit plus en détail.

Les pédales automatiques sont de deux types, à savoir les pédales automatiques dites « de route » et les pédales automatiques pour vélo tout terrain, dites « de VTT ».

Aujourd'hui, aussi bien les chaussures que les plaques de retenue utilisées pour les pédales automatiques de route sont différentes de celles utilisées pour les pédales automatiques de VTT.

Pour les pédales automatiques de route, les plaques de retenue sont généralement en matière plastique dure et elles présentent une taille relativement importante de manière à s'étendre sur pratiquement toute la largeur de la semelle. Ces plaques de retenue offrent ainsi une surface d'appui importante contre la pédale automatique. Les semelles des chaussures utilisées avec ces grandes plaques de retenue pour les pédales de route sont généralement plates et rigides. Il est évident que dans ces conditions, la marche à pied dans ce genre d'ensemble chaussure - plaque de retenue « de route » est particulièrement incommode et difficile. Pour cette raison, les ensembles de ce genre sont utilisés pratiquement exclusivement pour la pratique sportive du cycle et non pas pour un simple déplacement, par exemple pour se rendre à son lieu de travail ou pour faire des emplettes.

La conséquence en est que le cycliste utilisant un cycle équipé de pédales automatiques de route pour un simple déplacement est pratiquement obligé d'avoir une paire de chaussures dédiée pour ensuite changer de chaussures une fois arrivé à son lieu de destination. Ceci constitue bien entendu un inconvénient certain.

Pour les pédales automatiques de VTT, les plaques de retenue sont généralement métalliques et présentent une taille relativement réduite pour être placées centralement sur la semelle en étant entourées par des crampons formant des faces d'appui de la chaussure contre le sol. La hauteur des crampons est adaptée à celle de la plaque de retenue de sorte que celle-ci ne fasse pas saillie vers le bas au-delà des crampons et se trouve ainsi protégée par ceux-ci. Autrement dit, la plaque de retenue peut être considérée comme encastrée entre les crampons.

Ces chaussures et ces plaques de retenue pour pédales automatiques de VTT sont ainsi mieux adaptées à la marche à pied que les chaussures et les plaques de retenue « de route ». Ainsi, les plaques de retenue « de VTT » sont protégées contre l'usure de leur grande surface quand les chaussures « de VTT » sont utilisées pour la marche.

L'inconvénient majeur des chaussures dédiées aux pédales automatiques de route réside dans le fait que leur semelle manque complètement de flexibilité. Plus précisément, la semelle ne peut pas fléchir au niveau de l'avant du pied, ce qui fait que l'amplitude et la tonicité du déroulé naturel du pied sont absentes lors d'une marche à pied.

Il est ainsi impossible de marcher correctement dans ces chaussures « de route », contrairement à la marche à pied dans des chaussures conventionnelles dites urbaines ou de sport dans lesquelles le contact au sol est long, souple et le déroulé se fait du talon à la pointe du pied en fléchissant le pied au niveau de la partie avant de sa voûte.

On pourrait penser que ces problèmes seraient résolus si on fixe une plaque « de VTT », donc de faibles dimensions, à la semelle souple d'une chaussure conventionnelle de sport. Cependant, il sera de toute façon nécessaire également dans ce cas d'y intégrer d'abord la platine métallique de fixation de la plaque de retenue. On constatera alors que lors de la marche à pied avec une telle chaussure, le déroulé du pied se fait précisément à l'endroit de la platine et de la plaque de retenue qui alors empêcheraient fortement le bon déroulé du pied en neutralisant la souplesse de la chaussure justement dans cette zone de flexion.

Un autre inconvénient de cette solution est que du fait que le reste de la semelle est souple et légèrement compressible, il se crée lors du pédalage un point de pression sur une petite surface, contrairement aux semelles de chaussures de cycle pour l'utilisation sportive, que ce soit de route ou de VTT de compétition qui sont extrêmement rigides pour bien répartir l'effort sur toute la plante du pied. Ce point de pression concentré serait alors vécu comme très gênant par le cycliste puisqu'il causerait très vite des douleurs sous ses plantes de pied.

Un but de l'invention est de remédier aux inconvénients des ensembles connus de ce genre composé d'une chaussure et d'une plaque de retenue de la chaussure sur une pédale automatique de cycle, en proposant un tel ensemble qui est particulièrement bien adapté pour la marche à pied en offrant un bon déroulé du pied lors de la marche et dans lequel l'effort est réparti sur une grande surface d'appui des pieds sur les pédales lors du pédalage.

L'ensemble selon l'invention peut être utilisé avec une chaussure de cycle de route sans crampons, une chaussure de VTT avec crampons protégeant la plaque de retenue, ou bien avec une chaussure conventionnelle du type chaussure urbaine ou de sport.

L'objet de l'invention est un ensemble composé d'une chaussure et d'une plaque de retenue de la chaussure sur une pédale automatique de cycle, ladite plaque de retenue pouvant être fixée de manière détachable sous la semelle de la chaussure et comportant un moyen de liaison avant et un moyen de liaison arrière aptes à coopérer avec des moyens d'accrochage avant respectivement arrière prévus sur ladite pédale, ladite plaque de retenue étant formée par une pièce avant portant ledit moyen de liaison avant et par une pièce arrière portant ledit moyen de liaison arrière, lesdites pièces avant et arrière étant aptes à être fixées l'une indépendamment de l'autre sous la semelle de la chaussure, caractérisé en ce qu'en position montée, lesdites pièces avant et arrière sont séparées l'une de l'autre par une zone de flexion s'étendant entre un emplacement de fixation avant de ladite pièce avant et un emplacement de fixation arrière de ladite pièce arrière, et en ce qu'une surface d'appui est disposée au niveau de ladite zone de flexion de la semelle de sorte à remplir sensiblement l'espace entre lesdits emplacements de fixation avant et arrière desdites pièces avant et arrière de manière à permettre d'une part, auxdites pièces avant et arrière d'effectuer un mouvement de pivotement l'une par rapport à l'autre en fonction d'une flexion de ladite semelle dans ladite zone de flexion lorsque l'ensemble est utilisé lors d'une marche à pied, et d'autre part, à ladite surface d'appui à venir en appui sur une pédale automatique.

Selon d'autres caractéristiques de l'invention :
- la surface d'appui est une nervure transversale d'appui apte à venir en appui sur la pédale disposée dans ladite zone de flexion de la semelle de manière à remplir sensiblement l'espace entre lesdits emplacements de fixation avant et arrière desdites pièces avant et arrière ;
- ladite nervure d'appui est venue de matière avec la semelle ;
- ladite nervure d'appui est un élément rapporté fixé dans ladite zone de flexion de la semelle ;
- ledit moyen de liaison avant de ladite pièce avant s'étend dans un évidement dit avant de la semelle dimensionné pour recevoir en outre un moyen d'accrochage avant de ladite pédale ;
- ledit moyen de liaison arrière de ladite pièce arrière s'étend dans un évidement dit arrière de la semelle dimensionné pour recevoir en outre un moyen d'accrochage arrière de ladite pédale, ledit évidement arrière débouchant sur au moins un des côtés latéraux de la semelle ;
- dans une autre variante, ladite surface d'appui est formée par un moyen de liaison flexible reliant lesdites pièces avant et arrière l'une à l'autre;
- ledit moyen de liaison flexible est en un matériau à souplesse propre différent du matériau desdites pièces avant et arrière ;
- ledit moyen de liaison flexible est sous forme d'une lame mince flexible venue de matière avec lesdites pièces avant et arrière ;
- ledit moyen de liaison flexible sous forme d'une lame mince flexible est pourvu de nervures transversales sur au moins une de ses faces ;
- ledit moyen de liaison flexible comporte une protubérance arrière de ladite pièce avant montée coulissante sur une protubérance avant de ladite pièce arrière de manière à permettre la flexion dans ladite zone de flexion de la semelle ; et
- ladite protubérance arrière de ladite pièce avant est guidée dans un évidement formé dans la surface en face de ladite protubérance avant de ladite pièce arrière ;
- ladite semelle est une semelle rigide en au moins trois parties reliées les unes aux autres par des articulations transversales dont l'une est disposée immédiatement devant ledit emplacement de fixation arrière de ladite pièce arrière et une autre articulation est disposée immédiatement derrière ledit emplacement de fixation avant de ladite pièce avant ;
- lesdites articulations sont formées par des axes ;
- lesdites articulations sont formées par une colle souple ou un élastomère.

L'invention concerne également une plaque de retenue comportant un moyen de liaison avant et un moyen de liaison arrière aptes à coopérer avec des moyens d'accrochage avant et arrière prévus sur une pédale automatique de cycle, ladite plaque de retenue étant formée par une pièce avant portant ledit moyen de liaison avant et une pièce arrière portant ledit moyen de liaison arrière, lesdites pièces avant et arrière étant aptes à être fixées l'une indépendamment de l'autre sous une semelle d'une chaussure, caractérisée en ce qu'en position montée sous la semelle, lesdites pièces avant et arrière sont séparées l'une de l'autre par une zone de flexion s'étendant entre un emplacement de fixation avant de ladite pièce avant et un emplacement de fixation arrière de ladite pièce arrière, une surface d'appui étant disposée au niveau de ladite zone de flexion de la semelle de sorte à remplir sensiblement l'espace entre lesdits emplacements de fixation avant et arrière desdites pièces avant et arrière de manière à permettre d'une part, auxdites pièces avant et arrière d'effectuer un mouvement de pivotement l'une par rapport à l'autre en fonction d'une flexion de ladite semelle dans ladite zone de flexion lorsque la chaussure équipée de la plaque de retenue est utilisée lors d'une marche à pied, et d'autre part, à ladite surface d'appui à venir en appui sur une pédale automatique.

Selon d'autres caractéristiques de la plaque de retenue :
- lesdits pièces avant et arrière sont reliées l'une à l'autre par un moyen de liaison flexible formant ladite surface d'appui ;
- ledit moyen de liaison flexible est en un matériau à souplesse propre différent du matériau desdites pièces avant et arrière ;
- ledit moyen de liaison flexible est sous forme d'une lame mince venue de matière avec lesdites pièces avant et arrière ;
- ladite lame mince est sur au moins une de ses faces pourvue de nervures transversales ; et
- ledit moyen de liaison flexible comporte une protubérance arrière de ladite pièce avant montée coulissante sur une protubérance avant de ladite pièce arrière de manière à permettre la flexion dans ladite zone de flexion de la semelle.

L'invention concerne également une chaussure comportant sous sa semelle un emplacement de fixation dit avant et un emplacement de fixation dit arrière pour recevoir indépendamment l'une de l'autre une pièce avant respectivement une pièce arrière faisant ensemble fonction de plaque de retenue de la chaussure sur une pédale automatique, caractérisée en ce qu'elle comporte une zone de flexion s'étendant sur toute la largeur de la semelle entre lesdits emplacements de fixation avant et arrière et apte à séparer, en position montée, la pièce avant et la pièce arrière, et en ce qu'une surface d'appui est disposée au niveau de ladite zone de flexion de la semelle de sorte à remplir sensiblement l'espace entre lesdits emplacements de fixation avant et arrière desdites pièces avant et arrière, de manière à permettre d'une part, auxdites pièces avant et arrière d'effectuer un mouvement de pivotement l'une par rapport à l'autre en fonction d'une flexion de ladite semelle dans ladite zone de flexion lorsque la chaussure équipée de la plaque de retenue est utilisée lors d'une marche à pied, et d'autre part, à ladite surface d'appui à venir en appui sur une pédale automatique.

Selon d'autres caractéristiques de la chaussure :
- la surface d'appui est une nervure transversale d'appui disposée sous la semelle dans ladite zone de flexion de manière à remplir sensiblement l'espace entre lesdits emplacements de fixation avant et arrière desdites pièces avant et arrière ; et
- ladite semelle est une semelle rigide en trois parties reliées les unes aux autres par des articulations transversales dont l'une est disposée immédiatement devant ledit emplacement de fixation arrière et l'autre est disposée immédiatement derrière ledit emplacement de fixation avant.

D'autres caractéristiques et avantages de l'invention ressortiront de la description qui va suivre de plusieurs modes de réalisation non limitatifs de l'invention, en référence aux figures annexées dans lesquelles :
- la figure 1 est une vue en perspective d'en-dessous d'une chaussure selon l'invention du type chaussure de sport ;
- la figure 2 est une vue en perspective d'en-dessous d'une semelle d'une chaussure selon l'invention ;
- la figure 3 est une vue en perspective d'en-dessous d'une plaque de retenue selon l'invention comprenant une pièce avant et une pièce arrière ;
- la figure 4 est une vue en perspective de dessus de la semelle de chaussure de la figure 2 montrant deux platines de fixation des deux pièces de la plaque de retenue de la figure 3 ;
- la figure 5 est une vue en perspective d'en-dessous de la semelle de chaussure de la figure 2 sur laquelle les deux pièces de la plaque de retenue de la figure 3 ont été fixées ;
- la figure 6 est une vue en perspective d'en-dessous d'une semelle de chaussure urbaine, sans crampons, selon l'invention ;
- la figure 7 est une vue en perspective d'en-dessous d'une semelle de chaussure du type « de route », sans crampons, selon l'invention, et raccrochée à une pédale automatique ;
- la figure 8 est une vue en perspective d'en-dessous de la semelle et de la pédale automatique de la figure 7 illustrant une phase de libération de la semelle de chaussure par rotation vers l'extérieur ;
- la figure 9 une vue en perspective d'en-dessous d'une semelle pour une chaussure de route selon l'invention, en trois parties et avec des axes formant articulations entre les parties ;
- la figure 10 est une vue latérale d'une semelle similaire à celle de la figure 9, avec un autre type d'articulation entre les trois parties de la semelle ;
- la figure 11 est une vue latérale partielle et à plus grande échelle de la semelle de la figure 10 ;
- la figure 12 est une vue latérale de la semelle de la figure 10 illustrant la flexion de la semelle pour la marche à pied ;
- la figure 13 est une vue d'en-dessous d'une semelle similaire à celle illustrée à la figure 2 et pourvue d'une plaque de retenue dans laquelle les deux pièces avant et arrière de la plaque de retenue sont reliées par un moyen de liaison flexible ;
- la figure 14 est une vue en perspective d'en-dessous montrant séparément la plaque de retenue de la figure 13 ;
- la figure 15 est une vue en perspective d'en-dessous illustrant une variante de la plaque de retenue de la figure 14 ;
- la figure 16 est une vue latérale illustrant un autre mode de réalisation de la plaque de retenue, dans laquelle les deux pièces formant la plaque peuvent coulisser l'une sur l'autre ;
- la figure 17 est une vue en perspective illustrant la plaque de retenue de la figure 16 pendant le pédalage ; et
- la figure 18 est une vue en perspective illustrant le coulissement relatif des pièces avant et arrière de la plaque de retenue de la figure 16 pendant la marche à pied.

Dans les figures, les éléments identiques ou équivalents porteront les mêmes signes de référence.

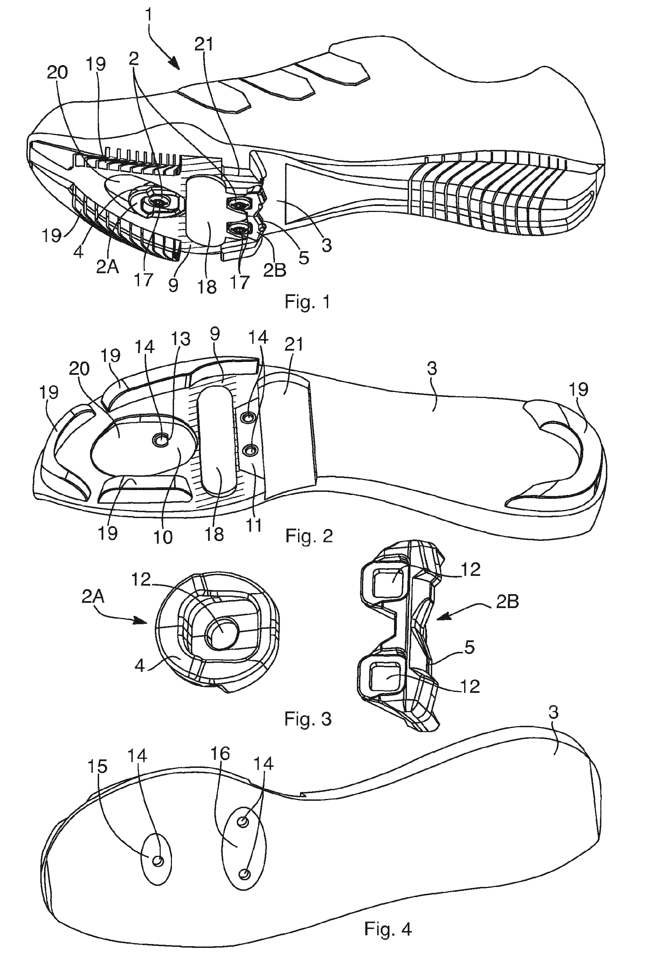

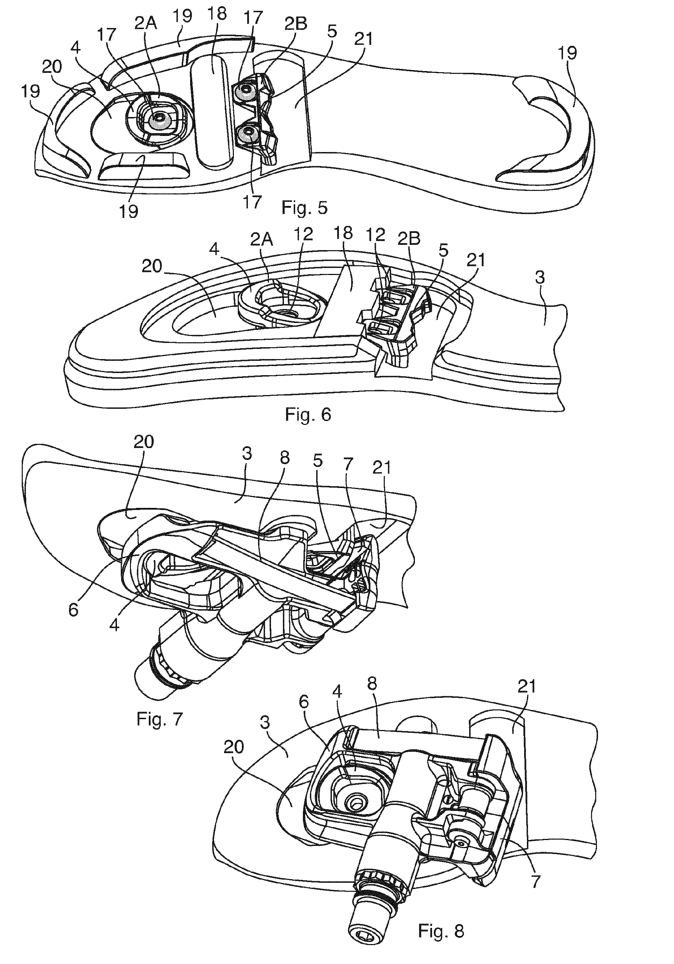

La figure 1 montre un ensemble selon l'invention composé d'une chaussure 1 et d'une plaque de retenue 2 fixée de manière détachable sous la semelle 3 de la chaussure. La plaque de retenue 2 comporte un moyen de liaison avant 4 et un moyen de liaison arrière 5 aptes à coopérer avec des moyens d'accrochage avant 6 respectivement arrière 7 d'une pédale automatique de cycle 8 (voir figure 7). La plaque de retenue 2 est de préférence en un matériau plastique dur ou en un métal léger.

Selon l'invention, la plaque de retenue 2 est formée par une première pièce 2A, dite pièce avant, portant le moyen de liaison avant 4 et une deuxième pièce 2B, dite pièce arrière, portant le moyen de liaison arrière 5. Ces première et deuxième pièces 2A, 2B peuvent être fixée l'une indépendamment de l'autre sous la semelle 3 de la chaussure 1.

Dans cet exemple de réalisation, la semelle 3 est rendue flexible sur toute sa largeur dans une zone de flexion 9 (montrée hachurée sur les figures 1 et 2). Cette zone de flexion 9 est définie entre un emplacement de fixation avant 10 (voir figure 2) de la pièce avant 2A et un emplacement de fixation arrière 11 de la pièce arrière 2B de la plaque de retenue 2.

Grâce à la flexibilité de la zone de flexion 9, les pièces avant et arrière 2A, 2B peuvent effectuer un mouvement de pivotement l'une par rapport à l'autre en fonction d'une flexion de la semelle 3 dans cette zone de flexion 9 lorsque l'ensemble chaussure - plaque de retenue est utilisé lors d'une marche à pied. Autrement dit, la semelle 3 est apte à suivre le déroulé naturel du pied qui se fait du talon à la pointe du pied en fléchissant le pied au niveau de la partie avant de sa voûte.

Dans l'exemple illustré à la figure 1, la chaussure est une chaussure de sport avec une semelle 3 dont la flexibilité dans la zone de flexion 9 est obtenue par le fait que la semelle est en un matériau présentant une souplesse propre, contrairement aux chaussures de cycle classiques.

La semelle illustrée à la figure 2 est également une semelle en un matériau souple permettant le fléchissement de la zone de flexion 9. Dans les deux cas, la semelle permet donc la flexion non seulement dans la zone de flexion 9, mais également sur toute sa longueur.

La figure 3 montre plus en détail et séparément la pièce avant 2A et la pièce arrière 2B formant la plaque de retenue 2. La pièce avant 2A comporte un seul trou central de fixation 12, alors que la pièce arrière 2B comporte deux trous de fixation 12 symétriquement placés sur celle-ci et déportés vers les côtés opposés. La pièce avant 2A est bloquée en rotation grâce à un méplat 13 disposé à côté d'un trou de fixation taraudé 14 dans la semelle 3 et qui vient coopérer avec un rebord correspondant (non représenté) effectué dans le corps de la pièce avant 2A, du côté tourné vers la semelle.

La figure 4 montre la face supérieure de la semelle 3 de la figure 2. La semelle est de ce côté pourvue de deux platines de fixation 15, 16 dont une platine avant 15 comporte le trou de fixation taraudé 14, et une platine arrière 16 comporte deux trous de fixation taraudé 14. Tous les trous de fixation 14 débouchent de l'autre côté de la semelle (voir figure 2) pour coopérer avec des vis de fixation 17 passant par les trous de fixation 12 des pièces avant et arrière 2A, 2B.

Selon une caractéristique de l'invention, une nervure transversale d'appui 18 apte à venir en appui sur la pédale automatique 8 est disposée dans la zone de flexion 9 de la semelle 3. Cette nervure d'appui 18 remplit sensiblement l'espace entre les emplacements de fixation avant et arrière 10, 11 des pièces avant et arrière 2A, 2B de la plaque de retenue 2.

Grâce à la présence de cette nervure d'appui 18, la force transmise par le pied est répartie sur une grande surface sous celui-ci, ce qui évite d'avoir un point de pression trop concentré dans la zone de flexion 9.

Les semelles illustrés sur les figures 1 et 2 comportent en outre des crampons 19 qui dans ces exemples s'étendent le long du bord de la semelle. Les crampons 19 sont destinés à servir de surfaces d'appui contre le sol lorsque la chaussure est utilisée pour la marche à pied.

La nervure d'appui 18 est selon un mode de réalisation venue de matière avec la semelle 3 et selon un autre mode de réalisation, il s'agit d'un élément rapporté fixé, par exemple par collage, dans la zone de flexion 9 de la semelle 3.

Le moyen de liaison avant 4 de la pièce avant 2A s'étend dans un évidement dit avant 20 dans la semelle 3. Cet évidement est dimensionné pour recevoir en outre le moyen d'accrochage avant 6 de la pédale 8 (voir figure 7). Il définit également l'emplacement de fixation avant 10.

De la même manière, au moins la partie arrière du moyen de liaison arrière 5 de la pièce arrière 2B s'étend dans un évidement arrière 21 dans la semelle 3 pour recevoir en outre le moyen d'accrochage arrière 7 de la pédale 8 (voir figures 7 et 8). Cet évidement arrière 21 débouche sur au moins un des côtés latéraux de la semelle 3 afin de permettre la rotation de la chaussure pour libérer la plaque de retenue 2 en prise entre les moyens d'accrochage avant et arrière 6, 7 de la pédale 8.

La figure 8 illustre la phase de libération de la semelle de chaussure 3 des moyens d'accrochage avant et arrière 6, 7 de la pédale automatique 8 par une rotation vers l'extérieur. On voit qu'une partie d'extrémité du moyen d'accrochage arrière 7 fait alors saillie de l'évidement arrière 21 débouchant sur ce côté.

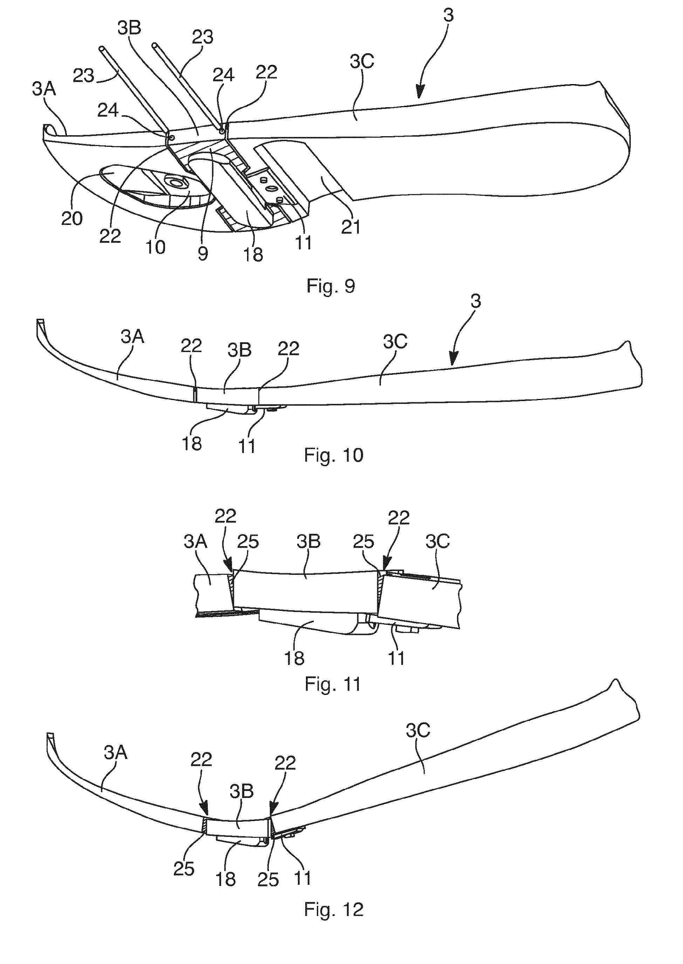

La figure 9 montre une semelle 3 qui est en un matériau rigide comme celui utilisé actuellement dans les chaussures de cycle. Cette semelle rigide est dans l'exemple illustré en trois parties, à savoir une partie avant 3A, une partie intermédiaire 3B et une partie arrière 3C. La partie intermédiaire 3B définit une zone de flexion 9 en étant reliée aux parties de semelle avant 3A et arrière 3C par des articulations transversales 22 dont une est disposée immédiatement devant l'emplacement de fixation arrière 11 et une autre est disposée immédiatement derrière l'emplacement de fixation avant 10 prévus sous la semelle 3. De cette manière, la semelle rigide 3 est rendue flexible dans la zone de flexion 9.

Dans l'exemple illustré, la partie de semelle intermédiaire 3B porte par ailleurs une nervure transversale d'appui 18 analogue à celle décrite en référence aux figures 1 et 2.

Dans le mode de réalisation illustré à la figure 9, les articulations transversales 22 comportent des axes 23 reçus dans des trous 24 effectués dans la partie intermédiaire de semelle 3B. Les trous 24 sont effectués dans la partie supérieure de la partie intermédiaire 3B de sorte que la semelle 3 soit flexible uniquement dans le sens du déroulé du pied du cycliste, alors que dans l'autre sens, les surfaces d'extrémité entre la partie avant 3A et la partie intermédiaire 3B, ainsi qu'entre celle-ci et la partie arrière 3C, viendront en butée les unes contres les autres. La semelle 3 est ainsi rendue flexible pour la marche à pied, alors qu'elle reste rigide lorsqu'elle est accrochée sur la pédale automatique.

Dans une variante de la semelle illustrée sur les figures 10 à 12, les parties de semelle 3A, 3B et 3C sont reliées les unes aux autres par des articulations transversales 22 formées par une colle souple 25 qui assure les mêmes fonctionnalités que les axes 23 utilisés dans les articulations décrites en référence à la figure 9.

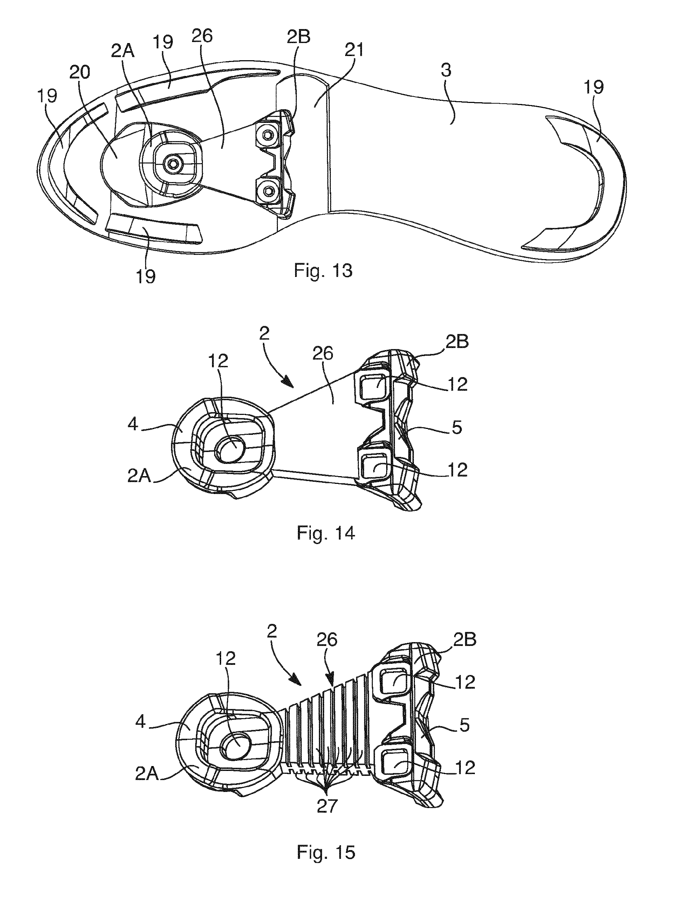

Dans un autre mode de réalisation de l'ensemble selon l'invention, les pièces avant et arrière 2A, 2B de la plaque de retenue 2 sont reliées l'une à l'autre par un moyen de liaison flexible 26 en forme de triangle tronqué, comme cela est illustré sur les figures 13 à 15. La face inférieure de ce moyen de liaison flexible 26 forme ici la surface d'appui qui va venir en appui sur la pédale automatique.

Le moyen de liaison 26 illustré à la figure 14 est de préférence en un matériau à souplesse propre, par exemple en élastomère, différent du matériau des pièces avant et arrière 2A, 2B de la plaque de retenue 2 qui sont en un matériau dur.

En alternative, le moyen de liaison 26 est sous forme d'une lame mince venue de matière avec les pièces avant et arrière 2A, 2B de la plaque de retenue 2.

Selon encore une variante illustré à la figure 15, cette lame mince est pourvue de nervures transversales 27 de rigidification disposées d'une distance les unes des autres telle que la flexion du moyen de liaison 26 soit toujours possible.

Les nervures transversales 27 peuvent bien entendu être disposées sur une seule face du moyen de liaison 26, de préférence sur la face inférieure de l'élément.

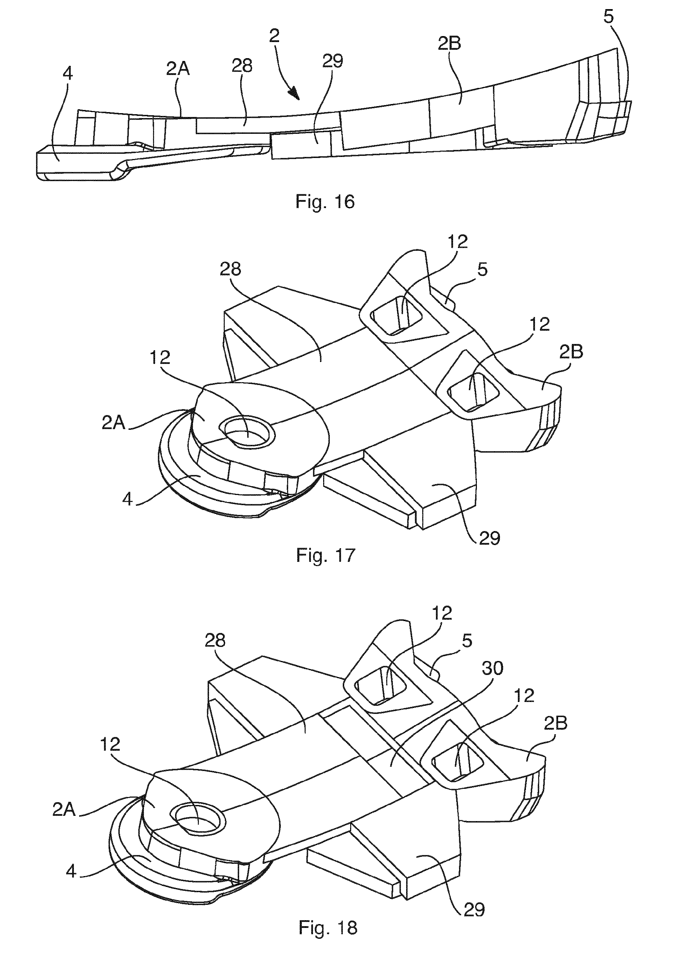

Finalement, les figures 16 à 18 illustrent une variante du moyen de liaison entre la pièce avant 2A et la pièce arrière 2B de la plaque de retenue 2. Dans cette variante, le moyen de liaison comporte une protubérance arrière 28 de la pièce avant 2A montée coulissante sur une protubérance avant 29 de la pièce arrière 2B de manière à permettre la flexion dans la zone de flexion 9 de la semelle 3.

La protubérance arrière 28 de la pièce avant 2A est avantageusement guidée dans un évidement 30 de forme complémentaire formé dans la surface en face de la protubérance avant 29 de la pièce arrière 2B. Les surfaces en contact peuvent être formées pour que le coulissement puisse être effectué linéairement ou suivant un arc de cercle.

Les plaques de retenue représentées sur les figures 14 à 18 peuvent être utilisées indifféremment sur des chaussures à semelle rigide en au moins trois parties, similaire à celle représenté sur les figures 9 à 12, ou sur des chaussures à semelle souple, au moins partiellement dans la zone de flexion 9, similaire à celles représentées sur les figures 2, 5 ou 6. Dans ce cas, il n'est pas nécessaire d'équiper les semelles d'une nervure transversale 18 puisque la surface d'appui sur la pédale automatique sera directement formée par la face inférieure du moyen de liaison flexible 26.

Bien entendu, l'invention n'est pas limitée aux exemples illustrés et décrits, mais un grand nombre de variantes et de combinaisons peut être envisagé sans pour autant sortir du cadre de l'invention. Elle est particulièrement bien adaptée pour être appliquée à des chaussures urbaines et à des chaussures de sport classiques.

## Revendications

1. Ensemble composé d'une chaussure (1) et d'une plaque de retenue (2) de la chaussure sur une pédale automatique de cycle (8), ladite plaque de retenue pouvant être fixée de manière détachable sous la semelle (3) de la chaussure (1) et comportant un moyen de liaison avant (4) et un moyen de liaison arrière (5) aptes à coopérer avec des moyens d'accrochage avant (6) respectivement arrière (7) prévus sur ladite pédale, ladite plaque de retenue (2) étant formée par une pièce avant (2A) portant ledit moyen de liaison avant (4) et par une pièce arrière (2B) portant ledit moyen de liaison arrière (5), lesdites pièces avant et arrière (2A, 2B) étant aptes à être fixées l'une indépendamment de l'autre sous la semelle (3) de la chaussure (1), **caractérisé en ce qu'**en position montée, lesdites pièces avant et arrière sont séparées l'une de l'autre par une zone de flexion (9) s'étendant entre un emplacement de fixation avant (10) de ladite pièce avant (2A) et un emplacement de fixation arrière (11) de ladite pièce arrière (2B), et **en ce qu'**une surface d'appui (18 ; 26) est disposée au niveau de ladite zone de flexion (9) de la semelle (3) de sorte à remplir sensiblement l'espace entre lesdits emplacements de fixation avant et arrière (10, 11) desdites pièces avant et arrière (2A, 2B) de manière à permettre d'une part, auxdites pièces avant et arrière (2A, 2B) d'effectuer un mouvement de pivotement l'une par rapport à l'autre en fonction d'une flexion de ladite semelle (3) dans ladite zone de flexion (9) lorsque l'ensemble est utilisé lors d'une marche à pied, et d'autre part, à ladite surface d'appui (18 ; 26) à venir en appui sur une pédale automatique.

2. Ensemble selon la revendication 1, **caractérisé en ce que** ladite surface d'appui (18) est une nervure transversale d'appui (18) disposée dans ladite zone de flexion (9) de la semelle (3).

3. Ensemble selon la revendication 2, **caractérisé en ce que** ladite nervure transversale d'appui (18) est venue de matière avec la semelle (3).

4. Ensemble selon la revendication 2, **caractérisé en ce que** ladite nervure transversale d'appui (18) est un élément rapporté fixé dans ladite zone de flexion (9) de la semelle (3).

5. Ensemble selon la revendication 1, **caractérisé en ce que** ladite surface d'appui est formée par un moyen de liaison flexible (26) reliant lesdites pièces avant et arrière (2A, 2B) l'une à l'autre.

6. Ensemble selon la revendication 5, **caractérisé en ce que** ledit moyen de liaison flexible (26) est en un matériau à souplesse propre différent du matériau desdites pièces avant et arrière (2A, 2B).

7. Ensemble selon la revendication 5, **caractérisé en ce que** ledit moyen de liaison flexible (26) est sous forme d'une lame mince flexible venue de matière avec lesdites pièces avant et arrière (2A, 2B).

8. Ensemble selon la revendication 7, **caractérisé en ce que** ledit moyen de liaison flexible (26) sous forme d'une lame mince flexible est pourvu de nervures transversales (27) sur au moins une de ses faces.

9. Ensemble selon la revendication 5, **caractérisé en ce que** ledit moyen de liaison flexible (26) comporte une protubérance arrière (28) de ladite pièce avant (2A) montée coulissante sur une protubérance avant (29) de ladite pièce arrière (2B) de manière à permettre la flexion dans ladite zone de flexion (9) de la semelle (3).

10. Ensemble selon la revendication 9, **caractérisé en ce que** ladite protubérance arrière (28) de ladite pièce avant (2A) est guidée dans un évidement (30) formé dans la surface en face de ladite protubérance avant (29) de ladite pièce arrière (2B).

11. Ensemble selon l'une quelconque des revendications précédentes, **caractérisé en ce que** ladite semelle (3) est une semelle (3) rigide en au moins trois parties (3A, 3B, 3C) reliées les unes aux autres par des articulations transversales (22) dont l'une est disposée immédiatement devant ledit emplacement de fixation arrière (11) de ladite pièce arrière (2B) et une autre articulation est disposée immédiatement derrière ledit emplacement de fixation avant (10) de ladite pièce avant (2A), la partie (3B) située entre les articulations transversales formant ladite zone de flexion (9).

12. Ensemble selon la revendication 11, **caractérisé en ce que** lesdites articulations (22) sont formées par des axes (23).

13. Ensemble selon la revendication 11, **caractérisé en ce que** lesdites articulations (22) sont formées par une colle souple (25) ou un élastom ère.

14. Ensemble selon l'une quelconque des revendications précédentes, **caractérisé en ce que** ledit moyen de liaison avant (4) de ladite pièce avant (2A) s'étend dans un évidement dit avant (20) de la semelle (3) dimensionné pour recevoir en outre un moyen d'accrochage avant (6) de ladite pédale automatique (8).

15. Ensemble selon l'une quelconque des revendications précédentes, **caractérisé en ce que** ledit moyen de liaison arrière (5) de ladite pièce arrière (2B) s'étend dans un évidement dit arrière (21) de la semelle (3) dimensionné pour recevoir en outre un moyen d'accrochage arrière (7) de ladite pédale automatique (8), ledit évidement arrière (21) débouchant sur au moins un des côtés latéraux de la semelle (3).

16. Plaque de retenue (2) comportant un moyen de liaison avant (4) et un moyen de liaison arrière (5) aptes à coopérer avec des moyens d'accrochage avant et arrière (6, 7) prévus sur une pédale automatique de cycle (8), ladite plaque de retenue étant formée par une pièce avant (2A) portant ledit moyen de liaison avant (4) et une pièce arrière (2B) portant ledit moyen de liaison arrière (5), lesdites pièces avant et arrière (2A, 2B) étant aptes à être fixées l'une indépendamment de l'autre sous une semelle (3) d'une chaussure (1), **caractérisée en ce qu'**en position montée sous la semelle, lesdites pièces avant et arrière sont séparées l'une de l'autre par une zone de flexion (9) s'étendant entre un emplacement de fixation avant (10) de ladite pièce avant (2A) et un emplacement de fixation arrière (11) de ladite pièce arrière (2B), une surface d'appui (18 ; 26) étant disposée au niveau de ladite zone de flexion (9) de la semelle (3) de sorte à remplir sensiblement l'espace entre lesdits emplacements de fixation avant et arrière (10, 11) desdites pièces avant et arrière (2A, 2B) de manière à permettre d'une part, auxdites pièces avant et arrière (2A, 2B) d'effectuer un mouvement de pivotement l'une par rapport à l'autre en fonction d'une flexion de ladite semelle (3) dans ladite zone de flexion (9) lorsque la chaussure équipée de la plaque de retenue est utilisée lors d'une marche à pied, et d'autre part, à ladite surface d'appui (18 ; 26) à venir en appui sur une pédale automatique.

17. Plaque de retenue (2) selon la revendication 16, **caractérisée en ce que** lesdites pièces avant et arrière (2A, 2B) sont reliées l'une à l'autre par un moyen de liaison flexible (26) formant ladite surface d'appui.

18. Plaque de retenue (2) selon la revendication 17, **caractérisée en ce que** ledit moyen de liaison flexible (26) est en un matériau à souplesse propre différent du matériau desdites pièces avant et arrière (2A, 2B).

19. Plaque de retenue (2) selon la revendication 17, **caractérisée en ce que** ledit moyen de liaison flexible (26) est sous forme d'une lame mince venue de matière avec lesdites pièces avant et arrière (2A, 2B).

20. Plaque de retenue (2) selon la revendication 19, **caractérisée en ce que** ladite lame mince est sur au moins une de ses faces pourvue de nervures transversales (27).

21. Plaque de retenue (2) selon la revendication 17, **caractérisée en ce que** ledit moyen de liaison flexible (26) comporte une protubérance arrière (28) de ladite pièce avant (2A) montée coulissante sur une protubérance avant (29) de ladite pièce arrière (2B) de manière à permettre la flexion dans une zone de flexion (9) d'une semelle (3).

22. Plaque de retenue (2) selon la revendication 21, **caractérisée en ce que** ladite protubérance arrière (28) de ladite pièce avant (2A) est guidée dans un évidement (30) formé dans la surface en face de ladite protubérance avant (29) de ladite pièce arrière (2B).

23. Chaussure (1) comportant sous sa semelle (3) un emplacement de fixation dit avant (10) et un emplacement de fixation dit arrière (11) pour recevoir indépendamment l'une de l'autre une pièce avant (2A) respectivement une pièce arrière (2B) faisant ensemble fonction de plaque de retenue (2) de la chaussure (1) sur une pédale automatique (8), **caractérisée en ce qu'**elle comporte une zone de flexion (9) s'étendant sur toute la largeur de la semelle (3) entre lesdits emplacements de fixation avant et arrière (10, 11) et apte à séparer, en position montée, la pièce avant (2A) et la pièce arrière (2B), et **en ce qu'**une surface d'appui (18 ; 26) est disposée au niveau de ladite zone de flexion (9) de la semelle (3) de sorte à remplir sensiblement l'espace entre lesdits emplacements de fixation avant et arrière (10, 11) desdites pièces avant et arrière (2A, 2B), de manière à permettre d'une part, auxdites pièces avant et arrière (2A, 2B) d'effectuer un mouvement de pivotement l'une par rapport à l'autre en fonction d'une flexion de ladite semelle (3) dans ladite zone de flexion (9) lorsque la chaussure équipée de la plaque de retenue est utilisée lors d'une marche à pied, et d'autre part, à ladite surface d'appui (18 ; 26) à venir en appui sur une pédale automatique.

24. Chaussure (1) selon la revendication 23, **caractérisée en ce que** la surface d'appui est une nervure transversale d'appui (18) disposée sous la semelle (3) dans ladite zone de flexion (9).

25. Chaussure (1) selon la revendication 23 ou 24, **caractérisée en ce que** ladite semelle (3) est une semelle rigide en trois parties (3A, 3B, 3C) reliées les unes aux autres par des articulations transversales (22) dont l'une est disposée immédiatement devant ledit emplacement de fixation arrière (11) et l'autre est disposée immédiatement derrière ledit emplacement de fixation avant (10), la partie (3B) située entre les articulations transversales formant ladite zone de flexion (9).
